(19) **Europäisches Patentamt**
**European Patent Office**
**Office européen des brevets**

(11) **EP 2 482 485 A1**

(12) **EUROPEAN PATENT APPLICATION**
published in accordance with Art. 153(4) EPC

(43) Date of publication:
**01.08.2012 Bulletin 2012/31**

(51) Int Cl.:
*H04L 5/06* (2006.01)　　　*H04L 5/26* (2006.01)
*H04L 27/26* (2006.01)　　　*H04W 88/08* (2009.01)

(21) Application number: **10789004.8**

(22) Date of filing: **29.06.2010**

(86) International application number:
**PCT/CN2010/074749**

(87) International publication number:
**WO 2010/145608 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **02.11.2009 CN 200910176093**

(71) Applicant: **ZTE Corporation
Shenzhen, Guangdong 518057 (CN)**

(72) Inventors:
• **JIANG, Jing
Shenzhen
Guangdong 518057 (CN)**

• **ZHANG, Wenfeng
Shenzhen
Guangdong 518057 (CN)**

(74) Representative: **Krauns, Christian et al
Wallinger Ricker Schlotter Tostmann
Patent- und Rechtsanwälte
Zweibrückenstraße 5-7
80331 München (DE)**

(54) **PILOT FREQUENCY MAPPING METHOD AND ADOPTED BASE STATION**

(57) A method for mapping a pilot is applied in a Long-Term Evolution advanced system. The method includes: when mapping the pilot onto a frequency resource, if the pilot conflicts with the resource where one or more of a physical broadcast channel (PBCH), a primary synchronous signal (PSS), a secondary synchronous signal (SSS), a paging channel and a system information block 1 (SIB1) in a system message are located, then mapping the pilot onto another resource except the conflicting resource, wherein the pilot comprises a channel measurement pilot and a demodulation pilot. The present invention also provides an eNodeB. The design overhead of the pilot in the present invention is low, which can ensure the channel measurement performance and improve the throughput of the LTE-A system.

FIG. 1

**Description**

Technical Field

The present invention relates to a Long-Term Evolution advance system, and particularly, to a method for mapping a pilot and an eNodeB adopted thereby.

Background of the Related Art

In order to improve cell throughput and carry out inter-cell interference coordination, the new generation wireless mobile communication system, such as Long-Term Evolution advanced (LTE-Advanced or LTE-A) system and International Mobile Telecommunication advance (IMT-Advance) system and so on, introduces the network-level coordinated multipoint transmission and reception (COMP) technology.

The 56th conference of the 3rd Generation Partnership Project (3GPP) LTE has defined two pilots for the LTE-Advanced: channel measurement pilot (abbreviated as CSI-RS (Channel State Information Reference Symbols) hereinafter) and demodulation pilot (abbreviated as DMRS (Demodulation Reference Symbols) hereinafter), wherein the channel measurement pilot is taken as the basis of scheduling information acquisition and will determine the system channel quality information (CQI), precoding matrix information (PMI) and the value of rank (RI), which significantly decides the system performance. The channel measurement pilot is cell-specific, and more disperse relative to the demodulation pilot in terms of time-frequency resource. Multi-antenna processing can be carried out on the demodulation pilot as on the data, for the mobile terminal to demodulate data.

However, currently, how the pilot operates in the LTE-Advanced system is still undefined, and the mapping rule thereof is also not defined.

Summary of the Invention

The technical problem to be solved by the present invention is to propose a method for mapping a pilot and an eNodeB adopted thereby, so as to map the pilot onto a physical resource for sending.

In order to solve the above technical problem, the method for mapping a pilot in the present invention is applied in a Long-Term Evolution advance system, comprising:

when mapping the pilot onto a frequency resource, if the pilot conflicts with the resource where one or more of a physical broadcast channel (PBCH), a primary synchronous signal (PSS), a secondary synchronous signal (SSS), a paging channel and a system information block 1 (SIB1) in system message are located, then mapping the pilot onto another resource except the conflicting resource, wherein

the pilot comprises a channel measurement pilot and a demodulation pilot.

If the pilot conflicts with the PBCH, the step of mapping the pilot onto another resource except the conflicting resource comprises: mapping the pilot onto a resource not occupied by PBCH in a subframe where the PBCH is located; or mapping the pilot onto another subframe except the subframe where the PBCH is located.

If the pilot conflicts with the PSS, the step of mapping the pilot onto another resource except the conflicting resource comprises: mapping the pilot onto a resource not occupied by PSS in a subframe where the PSS is located; or mapping the pilot onto another subframe except the subframe where the PSS is located.

If the pilot conflicts with the SSS, the step of mapping the pilot onto another resource except the conflicting resource comprises: mapping the pilot onto a resource not occupied by SSS in a subframe where the SSS is located; or mapping the pilot onto another subframe except the subframe where the SSS is located.

If the pilot conflicts with the Paging Channel, the step of mapping the pilot onto another resource except the conflicting resource comprises: mapping the pilot onto a resource not occupied by Paging in a subframe where the Paging Channel is located; or mapping the pilot onto another subframe except the subframe where the Paging Channel is located.

If the pilot conflicts with the SIB1, the step of mapping the pilot onto another resource except the conflicting resource comprises: mapping the pilot onto a resource not occupied by SIB1 in a subframe where the SIB1 is located; or mapping the pilot onto another subframe except the subframe where the SIB 1 is located.

When the system employs a frequency division duplex (FDD) frame structure or a time division duplex (TDD) frame structure and the pilot conflicts with the PBCH, the pilot is mapped on another resource except the time frequency resource occupied by the PBCH of a subframe 0; or the pilot is mapped onto another subframe except the subframe 0.

When the system employs a frequency division duplex (FDD) frame structure and the pilot conflicts with the PSS, the pilot is mapped on another resource except the time frequency resource occupied by the PSS of a subframe 0 and subframe 5; or the pilot is mapped onto another subframe except the subframe 0 and subframe 5.

When the system employs a TDD frame structure and the pilot conflicts with the PSS, the pilot is mapped on another resource except the time frequency resource occupied by the PSS of a subframe 1 and subframe 6; or the pilot is mapped onto another subframe except the subframe 1 and subframe 6.

When the system employs an FDD frame structure and the pilot conflicts with the SSS, the pilot is mapped on another resource except the time frequency resource occupied by the SSS of a subframe 5; or the pilot is mapped onto another subframe except the subframe 5.

When the system employs a TDD frame structure and the pilot conflicts with the SSS, the pilot is mapped on another resource except the time frequency resource occupied by the SSS of a subframe 0 and subframe 6; or the pilot is mapped onto another subframe except the subframe 0 and subframe 6.

When the system employs an FDD frame structure and the pilot conflicts with the Paging Channel, the pilot is mapped on another resource except the time frequency resource occupied by the Paging Channel of a subframe 4 and subframe 9; or the pilot is mapped onto another subframe except the subframe 4 and subframe 9.

When the system employs a TDD frame structure and the pilot conflicts with the Paging Channel, the pilot is mapped on another resource except the time frequency resource occupied by the Paging Channel of a subframe 5; or the pilot is mapped onto another subframe except the subframe 5.

When the system employs an FDD (frequency division duplex) frame structure or a TDD (time division duplex) frame structure and the pilot conflicts with the SIB1, the pilot is mapped on another resource except the time frequency resource occupied by the SIB1 of a subframe 5; or the pilot is mapped onto another subframe except the subframe 5.

In order to solve the above technical problem, the eNodeB in the present invention is applied in a Long-Term Evolution advance system, comprising a mapping unit; wherein

the mapping unit is configured to: when mapping the pilot onto a frequency resource, if the pilot conflicts with the resource where one or more of a physical broadcast channel (PBCH), a primary synchronous signal (PSS), a secondary synchronous signal (SSS), a paging channel and a system information block 1 (SIB1) in system message are located, then map the pilot onto another resource except the conflicting resource, wherein

the pilot comprises a channel measurement pilot and a demodulation pilot.

If the pilot conflicts with the PBCH, the mapping unit is configured to map the pilot onto another resource except the conflicting resource according to the following manner:

mapping the pilot onto a resource not occupied by PBCH in a subframe where the PBCH is located; or

mapping the pilot onto another subframe except the subframe where the PBCH is located.

If the pilot conflicts with the PSS, the mapping unit is configured to map the pilot onto another resource except the conflicting resource according to the following manner:

mapping the pilot onto a resource not occupied by PSS in a subframe where the PSS is located; or

mapping the pilot onto another subframe except the subframe where the PSS is located.

If the pilot conflicts with the SSS, then the mapping unit is configured to map the pilot onto another resource except the conflicting resource according to the following manner: mapping the pilot onto a resource not occupied by SSS in a subframe where the SSS is located; or mapping the pilot onto another subframe except the subframe where the SSS is located.

If the pilot conflicts with the Paging Channel, then the mapping unit is configured to map the pilot onto another resource except the conflicting resource according to the following manner: mapping the pilot onto a resource not occupied by Paging Channel in a subframe where the Paging Channel is located; or mapping the pilot onto another subframe except the subframe where the Paging Channel is located.

If the pilot conflicts with the SIB 1, then the mapping unit is configured to map the pilot onto another resource except the conflicting resource according to the following manner: mapping the pilot onto a resource not occupied by SIB1 in a subframe where the SIB1 is located; or mapping the pilot onto another subframe except the subframe where the SIB 1 is located.

In summary, the present invention has the following beneficial effects:

(1) in an LTE-A system, the pilot can be sent in any subframe.

(2) when pilot conflicts with one or more of PBCH, SSS, PSS, SIB1 and Paging (paging channel), the channel measurement pilot will not be sent on the conflicting physical resource, and it has no influence on the PBCH, SSS, PSS, SIB1 and Paging information receiving of the LTE-A user.

(3) the design overhead of the pilot in the present invention is low, which can ensure the channel measurement performance and improve the throughput of the LTE-A system.

Brief Description of Drawings

Fig. 1 is a schematic diagram of resource mapping under frequency division duplex; and

Fig. 2 is a schematic diagram of resource mapping under time division duplex.

Preferred Embodiments of the Present Invention

In the embodiments of the present invention, the pilot includes channel measurement pilot and demodulation pilot. In order to enable the channel measurement pilot to provide complete channel measurement information, it is required to send the channel measurement pilot on the entire frequency resources of the resources scheduled by the LTE-A user. The demodulation pilot is used for the demodulation of the LTE-A user and may also conflict with other physical channels and signals in the system.

When mapping the pilot onto a physical resource, if the pilot conflicts with the physical broadcast channel (PBCH), then the pilot will not be sent on the resource occupied by the PBCH, and the particular processing way is as follows: the pilot can be mapped onto the subframe where the PBCH is located, but the pilot is not mapped on the physical resource occupied by the PBCH; the pilot may also not be mapped on the subframe occupied by the PBCH, and the pilot is mapped on another resource except the subframe occupied by the PBCH.

If the pilot conflicts with the primary synchronous signal (PSS), then the pilot will not be sent on the resource occupied by the PSS, and the particular processing way is as follows: the pilot can be mapped onto the subframe where the PSS is located, but the pilot is not mapped on the physical resource occupied by the PSS; the pilot may also not be mapped on the subframe occupied by the PSS, and the pilot is mapped on another resource except the subframe occupied by the PSS.

If the pilot conflicts with the secondary synchronous signal (SSS), then the pilot will not be sent on the resource occupied by the SSS, and the particular processing way is as follows: the pilot can be mapped onto the subframe where the PSS is located, but the pilot is not mapped on the physical resource occupied by the SSS; the pilot may also not be mapped on the subframe occupied by the SSS, and the pilot is mapped on another resource except the subframe occupied by the SSS.

If the pilot conflicts with the Paging Channel, then the pilot will not be sent on the resource occupied by the Paging Channel, and the particular processing way is as follows: the pilot can be mapped onto the subframe where the Paging Channel is located, but the pilot is not mapped on the physical resource occupied by the Paging Channel; the pilot may also not be mapped on the subframe occupied by the Paging Channel, and the pilot is mapped on another resource except the subframe occupied by the Paging.

When mapping the pilot onto a physical resource, if the pilot conflicts with the system information block 1 (SIB1), then the pilot will not be sent on the resource occupied by SIB1, and the particular processing way is: the pilot can be mapped onto the subframe where the SIB1 is located, but the pilot is not mapped on the physical resource occupied by the SIB1; the pilot may also not be mapped on the subframe occupied by the SIB1, and the pilot is mapped on another resource except the subframe occupied by the SIB 1.

Hereinafter, the particular embodiments of the present invention will be described in conjunction with the accompanying drawings.

Embodiment 1:

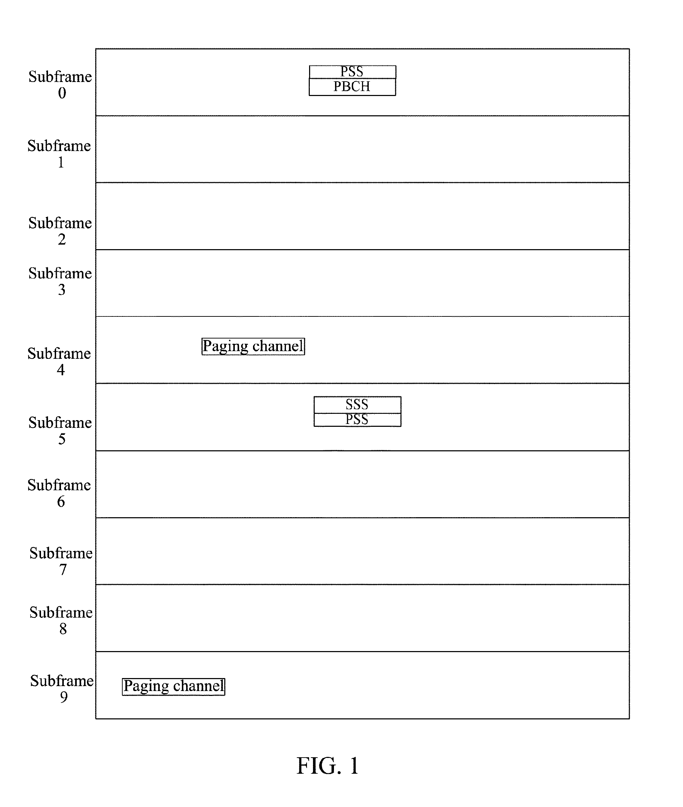

Fig. 1 shows a schematic diagram of resource mapping when the system employs an FDD frame structure, in Fig. 1, the mapping location of PBCH is the $0^{th}$, $1^{st}$, $2^{nd}$, and $3^{rd}$ orthogonal frequency division multiplexing (OFDM) symbols of time slot 1 of subframe 0, and the locations of the subcarrier and OFDM symbols are:

$$k = \frac{N_{RB}^{DL} N_{sc}^{RB}}{2} - 36 + k',$$

$k' = 0,1,...,71$ $l = 0,1,...,3$

where $l$ is an OFDM symbol mapped by the PBCH, $k$ is the subcarrier location mapped by the PBCH on subframe 0, $N_{RB}^{DL}$ is the number of all the physical resource blocks which can be allocated in the downlink, and $N_{sc}^{RB}$ is the number of subcarriers contained in a physical resource block.

When the channel measurement pilot and demodulation pilot (hereinafter both of them will be called as pilot collectively) are mapped to a physical resource, if the pilot conflicts with the PBCH, the pilot can be mapped on the subframe 0, but the channel measurement pilot cannot be mapped on the 0th, 1st, 2nd, and 3rd OFDM symbols of time slot 1 of subframe 0; or the pilot is not mapped on subframe 0 where the PBCH is located.

Embodiment 2:

As shown in Fig. 1, the mapping location of the primary synchronous signal is the last OFDM symbol of time slot 0 and time slot 10 of subframe 0 and subframe 5, and the subcarrier location is: $a_{k,l} = d(n)$, $n = 0,...,61$

$$k = n - 31 + \frac{N_{RB}^{DL} N_{sc}^{RB}}{2}$$

where k is the subcarrier location mapped by the PSS, $N_{RB}^{DL}$ is the number of all the physical resource blocks which can be allocated in the downlink, and $N_{sc}^{RB}$ is the number of subcarriers contained in a physical resource block.

When the pilot is mapped with the physical resource, if the pilot conflicts with the PSS, the pilot can be mapped onto the subframe where the PSS is located, but the pilot cannot be mapped onto the last OFDM symbol of time slot 0 and time slot 10 of subframe 0 and subframe 5 where the PSS is located; or the pilot is not mapped on subframe 0 and subframe 5 where the PSS is located.

Embodiment 3:

As shown in Fig. 1, the mapping location of the SSS is on the second last OFDM symbol of time slot 0 and time slot 10 of subframe 5, and the particular mapping method is:

$$k = n - 31 + \frac{N_{RB}^{DL} N_{sc}^{RB}}{2}$$

$$l = \begin{cases} N_{symb}^{DL} - 2 & \text{in slots 0 and 10} \quad \text{for frame structure type 1} \\ N_{symb}^{DL} - 1 & \text{in slots 1 and 11} \quad \text{for frame structure type 2} \end{cases}$$

$n = -5, -4, ..., -1, 62, 63, ...66$

where $l$ is an symbol mapped by the SSS, k is the subcarrier location mapped by the SSS, $N_{RB}^{DL}$ is the number of all the physical resource blocks which can be allocated in the downlink, and $N_{sc}^{RB}$ is the number of subcarriers contained in a physical resource block.

When the pilot is mapped with the physical resource, if the pilot conflicts with the SSS, the pilot can be mapped onto the subframe 5 where the SSS is located, but the pilot cannot be mapped onto the penultimate OFDM symbol of time slot 0 and time slot 10 of subframe 5 where the SSS is located; or the pilot is not mapped on subframe 5 where the SSS is located.

Embodiment 4:

As shown in Fig. 1, the paging channel is mapped onto subframe 4 and subframe 9, when the pilot is mapped with the physical resource, and conflicts with the paging channel, the pilot can be mapped onto subframe 4 and subframe 9 where the paging channel is located, but cannot be mapped onto the OFDM symbol occupied by the paging channel; or the pilot is not mapped onto subframe 4 and subframe 9 where the paging channel is located.

Embodiment 5:

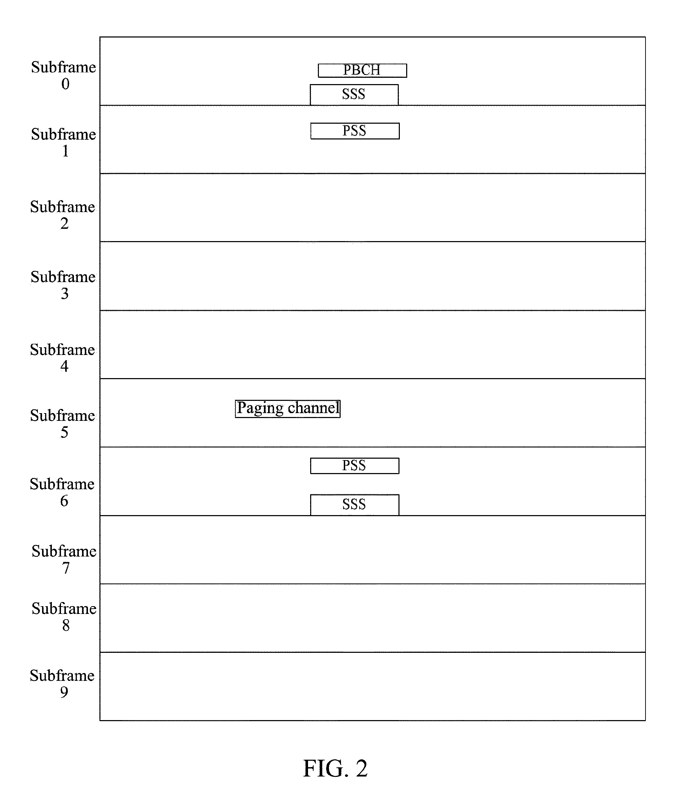

Fig. 2 shows a schematic diagram of resource mapping when the system employs a TDD frame structure, in Fig. 2, the mapping location of PBCH is the 0th, 1st, 2nd, and 3rd orthogonal frequency division multiplexing (OFDM) symbols of time slot 1 of subframe 0, and the locations of the subcarrier and symbols are:

$$k = \frac{N_{\mathrm{RB}}^{\mathrm{DL}} N_{\mathrm{sc}}^{\mathrm{RB}}}{2} - 36 + k',$$

$k' = 0,1,...,71$ $l = 0,1,...,3$

where $l$ is an OFDM symbol mapped by the PBCH, $k$ is the subcarrier location mapped by the PBCH on subframe 0, $N_{\mathrm{RB}}^{\mathrm{DL}}$ is the number of all the physical resource blocks which can be allocated in the downlink, and $N_{\mathrm{sc}}^{\mathrm{RB}}$ is the number of subcarriers contained in a physical resource block.

When the pilot is mapped onto the physical resource, if the pilot conflicts with the PBCH, the pilot can be mapped onto subframe 0, but the pilot cannot be mapped to the 0th, 1st, 2nd, and 3rd orthogonal frequency division multiplexing (OFDM) symbols of time slot 1 of subframe 0; or the pilot cannot be mapped on subframe 0 where the PBCH is located.

Embodiment 6:

As shown in Fig. 2, the mapping location of primary synchronous signal is the third OFDM symbol of subframe 1 and subframe 6, and the subcarrier location is:

$$k = n - 31 + \frac{N_{\mathrm{RB}}^{\mathrm{DL}} N_{\mathrm{sc}}^{\mathrm{RB}}}{2}$$

$n = -5,-4,...,-1,62,63,...66$

where $k$ is the subcarrier location mapped by the PSS, $N_{\mathrm{RB}}^{\mathrm{DL}}$ is the number of all the physical resource blocks which can be allocated in the downlink, and $N_{\mathrm{sc}}^{\mathrm{RB}}$ is the number of subcarriers contained in a physical resource block.

When the pilot is mapped with the physical resource, if the pilot conflicts with the PSS, the pilot can be mapped onto subframe 1 and subframe 6 where the PSS is located, but the pilot cannot be mapped onto the third OFDM symbol of subframe 1 and subframe 6 where the PSS is lcoated; or the pilot is not mapped on subframe 1 and subframe 6 where the PSS is located.

Embodiment 7:

As shown in Fig. 2, the mapping location of the SSS is the last symbol of time slot 0 and time slot 11 of subframe 0 and subframe 6, and the particular mapping method is:

$$k = n - 31 + \frac{N_{RB}^{DL} N_{sc}^{RB}}{2}$$

$$l = \begin{cases} N_{symb}^{DL} - 2 & \text{in slots } 0 \text{ and } 10 \quad \text{for frame structure type } 1 \\ N_{symb}^{DL} - 1 & \text{in slots } 1 \text{ and } 11 \quad \text{for frame structure type } 2 \end{cases}$$

n = -5,-4,...,-1,62,63,...66

where $l$ is an symbol mapped by the SSS, $k$ is the subcarrier location mapped by the SSS, $N_{RB}^{DL}$ is the number of all the physical resource blocks which can be allocated in the downlink, and $N_{sc}^{RB}$ is the number of subcarriers contained in a physical resource block.

When the pilot is mapped with the physical resource, if the pilot conflicts with the SSS, the pilot can be mapped onto subframe 0 and subframe 6 where the SSS is located, but the pilot cannot be mapped onto the last symbol of subframe 0 and subframe 6 where the SSS is located; or the pilot is not mapped on subframe 0 and subframe 6 where the SSS is located.

Embodiment 8:

SIB1 is applied in fixed scheduling with a period of 80 ms, and employs a retransmission within 80 ms. The first transmission of SIB1 is arranged in a subframe #5 of a radio frame which meets system frame number (SFN) SFN mod 8 = 0, and the retransmission is in the subframes #5 of all other radio frames meeting SFN mod 2 = 0.

When the pilot is mapped with the physical resource, if the pilot conflicts with the SIB 1, the pilot can be mapped onto subframe 0 and subframe 6 where the SIB 1 is located, but the pilot cannot be mapped onto the last symbol of time slot 1 and time slot 11 of subframe 0 and subframe 6 where the SIB 1 is located; or the pilot is not mapped on subframe 0 and subframe 6 where the SIB 1 is located.

Embodiment 9:

As shown in Fig. 2, the mapping location of the paging channel is the mapping location of the physical downlink shared channel (PDSCH) of subframe 5, when the pilot is mapped with the physical resource and conflicts with the paging channel, the pilot can be mapped on subframe 5 where the paging channel is located, but cannot be mapped onto the OFDM symbol occupied by the paging channel; or the pilot is not mapped on subframe 5 where the paging channel is located.

The present invention also provides an eNodeB, comprising a mapping unit; wherein

the mapping unit is configured as follows: when mapping the pilot onto a physical resource, if the pilot conflicts with the physical broadcast channel (PBCH), then the pilot is not on the resource occupied by PBCH, the pilot can be mapped onto the subframe where the PBCH is located, but the pilot is not mapped on the physical resource occupied by the PBCH; the pilot may not be mapped on the subframe occupied by the PBCH, and the pilot is mapped on another resource except the subframe occupied by the PBCH;

if the pilot conflicts with the primary synchronous signal, then the pilot is not sent on the resource occupied by the PSS, the pilot can be mapped onto the subframe where the PSS is located, but the pilot is not mapped on the physical resource occupied by the PSS; the pilot may not be mapped on the subframe occupied by the PSS, and the pilot is mapped on another resource except the subframe occupied by the PSS;

if the pilot conflicts with the secondary synchronous signal, then the pilot is not sent on the resource occupied by the SSS, the pilot can be mapped onto the subframe where the SSS is located, but the pilot is not mapped on the physical resource occupied by the SSS; the pilot may not be mapped on the subframe occupied by the SSS, and the pilot is mapped on another resource except the subframe occupied by the SSS;

if the pilot conflicts with the Paging Channel, then the pilot is not sent on the resource occupied by the Paging Channel, the pilot can be mapped onto the subframe where the Paging Channel is located, but the pilot is not mapped on the physical resource occupied by the Paging Channel; the pilot may not be mapped on the subframe occupied by the Paging Channel, and the pilot is mapped on another resource except the subframe occupied by the Paging.

If the pilot conflicts with the system information block type 1, then the channel measurement pilot will not be sent on the mapping resource of the system information block type 1, the pilot can be mapped onto the subframe where the system information block type 1 is located, but the pilot is not mapped on the physical resource occupied by the system information block type 1; the pilot may also not be mapped on the physical resource occupied by the system information block type 1, and the pilot is mapped on another resource except the subframe occupied by the system information block type 1.

Those skilled in the art shall understand that all of or part of the steps in the above methods can be completed by instructing relevant hardware by programs, and the programs can be stored in a computer readable storage medium, such as read only memory, magnetic disk, or optical disk, etc. Optionally, all of or part of the steps of the above embodiments can also be implemented using one or more integrated circuits. Accordingly, the respective module/unit in the above embodiments can be implemented by use of hardware or software function module. The present invention is not limited to any particular form of the combination of hardware and software.

Above description is only to illustrate the preferred embodiments but not to limit the present invention. Various alternations and changes to the present invention are apparent to those skilled in the art. The protection scope of the present invention shall comprise any modification, equivalent substitution and improvement made within the spirit and principle of the present invention.

Industrial Applicability

In the present invention, the pilot can be sent in any subframe in an LTE-A system. When the pilot conflicts with one or more of PBCH, SSS, PSS, SIB1 and Paging, the channel measurement pilot will not be sent on the conflicting physical resource, and it has no influence on the PBCH, SSS, PSS, SIB1 and Paging information receiving of the LTE-A user. Moreover, the design overhead of the pilot in the present invention is low, which can ensure the channel measurement performance and improve the throughput of the LTE-A system.

**Claims**

1. A method for mapping a pilot, applied in a Long-Term Evolution advanced system, comprising:

   when mapping the pilot onto a frequency resource, if the pilot conflicts with the resource where one or more of a physical broadcast channel (PBCH), a primary synchronous signal (PSS), a secondary synchronous signal (SSS), a paging channel and a system information block 1 (SIB1) in system message are located, then mapping the pilot onto another resource except the conflicting resource, wherein
   the pilot comprises a channel measurement pilot and a demodulation pilot.

2. The method as claimed in claim 1, wherein
   if the pilot conflicts with the PBCH, the step of mapping the pilot onto another resource except the conflicting resource comprises:

   mapping the pilot onto a resource not occupied by PBCH in a subframe where the PBCH is located; or
   mapping the pilot onto another subframe except the subframe where the PBCH is located.

3. The method as claimed in claim 1, wherein
   if the pilot conflicts with the PSS, the step of mapping the pilot onto another resource except the conflicting resource comprises:

   mapping the pilot onto a resource not occupied by the PSS in a subframe where the PSS is located; or
   mapping the pilot onto another subframe except the subframe where the PSS is located.

4. The method as claimed in claim 1, wherein
   if the pilot conflicts with the SSS, the step of mapping the pilot onto another resource except the conflicting resource comprises:

   mapping the pilot onto a resource not occupied by SSS in a subframe where the SSS is located; or
   mapping the pilot onto another subframe except the subframe where the SSS is located.

5. The method as claimed in claim 1, wherein

if the pilot conflicts with the Paging Channel, the step of mapping the pilot onto another resource except the conflicting resource comprises:

mapping the pilot onto a resource not occupied by Paging Channel in a subframe where the Paging Channel is located; or
mapping the pilot onto another subframe except the subframe where the Paging Channel is located.

**6.** The method as claimed in claim 1, wherein
if the pilot conflicts with the SIB1, the step of mapping the pilot onto another resource except the conflicting resource comprises:

mapping the pilot onto a resource not occupied by SIB 1 in a subframe where the SIB 1 is located; or
mapping the pilot onto another subframe except the subframe where the SIB 1 is located.

**7.** The method as claimed in claim 2, wherein
when the system employs a time division duplex (TDD) frame structure or a frequency division duplex (FDD) frame structure and the pilot conflicts with the PBCH, the pilot is mapped on another resource except time frequency resource occupied by the PBCH of a subframe 0; or the pilot is mapped onto another subframe except the subframe 0.

**8.** The method as claimed in claim 3, wherein
when the system employs a frequency division duplex (FDD) frame structure and the pilot conflicts with the PSS, the pilot is mapped on another resource except the time frequency resource occupied by the PSS of a subframe 0 and a subframe 5; or the pilot is mapped onto another subframe except the subframe 0 and the subframe 5;
when the system employs a time division duplex (TDD) frame structure and the pilot conflicts with the PSS, the pilot is mapped on another resource except the time frequency resource occupied by the PSS of a subframe 1 and a subframe 6; or the pilot is mapped onto another subframe except the subframe 1 and the subframe 6.

**9.** The method as claimed in claim 4, wherein
when the system employs a frequency division duplex (FDD) frame structure and the pilot conflicts with the SSS, the pilot is mapped on another resource except the time frequency resource occupied by the SSS of a subframe 5; or the pilot is mapped onto another subframe except the subframe 5; and
when the system employs a time division duplex (TDD) frame structure and the pilot conflicts with the SSS, the pilot is mapped on another resource except the time frequency resource occupied by the SSS of a subframe 0 and a subframe 6; or the pilot is mapped onto a subframe except the subframe 0 and the subframe 6.

**10.** The method as claimed in claim 5, wherein
when the system employs a frequency division duplex (FDD) frame structure and the pilot conflicts with the Paging Channel, the pilot is mapped on another resource except the time frequency resource occupied by the Paging Channel of a subframe 4 and a subframe 9; or the pilot is mapped onto a subframe except the subframe 4 and the subframe 9; and
when the system employs a time division duplex (TDD) frame structure and the pilot conflicts with the Paging Channel, the pilot is mapped on another resource except the time frequency resource occupied by the Paging Channel of a subframe 5; or the pilot is mapped onto another subframe except the subframe 5.

**11.** The method as claimed in claim 6, wherein
when the system employs a frequency division duplex (FDD) frame structure or a time division duplex (TDD) frame structure and the pilot conflicts with the SIB1, the pilot is mapped on another resource except the time frequency resource occupied by the SIB1 of a subframe 5; or the pilot is mapped onto a subframe except the subframe 5.

**12.** An eNodeB, applied in a Long-Term Evolution advanced system and comprising a mapping unit, wherein
the mapping unit is configured to: when mapping a pilot onto a frequency resource, if the pilot conflicts with the resource where one or more of a physical broadcast channel (PBCH), a primary synchronous signal (PSS), a secondary synchronous signal (SSS), a paging channel and a system information block 1 (SIB1) in system message are located, then map the pilot onto another resource except the conflicting resource, wherein
the pilot comprises a channel measurement pilot and a demodulation pilot.

**13.** The eNodeB as claimed in claim 12, wherein
if the pilot conflicts with the PBCH, the mapping unit is configured to map the pilot onto another resource except the conflicting resource according to the following manner:

mapping the pilot onto a resource not occupied by PBCH in a subframe where the PBCH is located; or
mapping the pilot onto another subframe except the subframe where the PBCH is located.

14. The eNodeB as claimed in claim 12, wherein
if the pilot conflicts with the PSS, the mapping unit is configured to map the pilot onto another resource except the conflicting resource according to the following manner:

mapping the pilot onto a resource not occupied by the PSS in a subframe where the PSS is located; or
mapping the pilot onto another subframe except the subframe where the PSS is located.

15. The eNodeB as claimed in claim 12, wherein
if the pilot conflicts with the SSS, then the mapping unit is configured to map the pilot onto another resource except the conflicting resource according to the following manner:

mapping the pilot onto a resource not occupied by SSS in a subframe where the SSS is located;
or mapping the pilot onto another subframe except the subframe where the SSS is located;

if the pilot conflicts with the Paging Channel, then the mapping unit is configured to map the pilot onto another resource except the conflicting resource according to the following manner: mapping the pilot onto a resource not occupied by Paging Channel in a subframe where the Paging Channel is located; or mapping the pilot onto another subframe except the subframe where the Paging Channel is located; and
if the pilot conflicts with the SIB1, then the mapping unit is configured to map the pilot onto another resource except the conflicting resource according to the following manner:

mapping the pilot onto a resource not occupied by SIB1 in a subframe where the SIB1 is located;
or mapping the pilot onto another subframe except the subframe where the SIB 1 is located.

| | |
|---|---|
| Subframe 0 | PSS / PBCH |
| Subframe 1 | |
| Subframe 2 | |
| Subframe 3 | |
| Subframe 4 | Paging channel |
| Subframe 5 | SSS / PSS |
| Subframe 6 | |
| Subframe 7 | |
| Subframe 8 | |
| Subframe 9 | Paging channel |

FIG. 1

| | |
|---|---|
| Subframe 0 | PBCH<br>SSS |
| Subframe 1 | PSS |
| Subframe 2 | |
| Subframe 3 | |
| Subframe 4 | |
| Subframe 5 | Paging channel |
| Subframe 6 | PSS<br>SSS |
| Subframe 7 | |
| Subframe 8 | |
| Subframe 9 | |

FIG. 2

# INTERNATIONAL SEARCH REPORT

| | International application No. |
|---|---|
| | PCT/CN2010/074749 |

**A. CLASSIFICATION OF SUBJECT MATTER**

See extra sheet
According to International Patent Classification (IPC) or to both national classification and IPC

**B. FIELDS SEARCHED**

Minimum documentation searched (classification system followed by classification symbols)

IPC:H04W,H04M,H04L,H04Q,H04B,H04J

Documentation searched other than minimum documentation to the extent that such documents are included in the fields searched

Electronic data base consulted during the international search (name of data base and, where practicable, search terms used)

WPI,EPODOC,CPRSABS, CPPABS,CPDIABS,CNTXT,CNKI: pilot, frequency, LTE, resource?, map+, PBCH, PSS, SSS, pag+ w channel, SIB1, collid+, collision, impact+, conflict, frame?, signal?, synchroni+, base w station, TDD, FDD

**C. DOCUMENTS CONSIDERED TO BE RELEVANT**

| Category* | Citation of document, with indication, where appropriate, of the relevant passages | Relevant to claim No. |
|---|---|---|
| X | CN101222272A (ZTE COMMUNICATION CO LTD) 16 Jul. 2008（16.07.2008）abstract; claims 1-5; description page 1 paragraph 5- page 2 paragraph 5, page 5 paragraph 13- page 7 paragraph 1; figures 1-6 | 1-15 |
| A | CN101162987A (ZTE COMMUNICATION CO LTD) 16 Apr. 2008 (16.04.2008) the whole document | 1-15 |
| A | CN101299634A (ZTE COMMUNICATION CO LTD) 05 Nov. 2008 (05.11.2008) the whole document | 1-15 |
| A | CN101359984A (HUAWEI TECHNOLOGY CO LTD) 04 Feb. 2009 (04.02.2009) the whole document | 1-15 |
| A | CN101350801A (ZTE COMMUNICATION CO LTD) 21 Jan. 2009 (21.01.2009) the whole document | 1-15 |

☐ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 Sep. 2010 (25.09.2010) | **08 Oct. 2010 (08.10.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>HAN, Zheng<br><br>Telephone No. (86-10)62411998 |
|---|---|

Form PCT/ISA /210 (second sheet) (July 2009)

## INTERNATIONAL SEARCH REPORT
Information on patent family members

International application No.

PCT/CN2010/074749

| Patent Documents referred in the Report | Publication Date | Patent Family | Publication Date |
|---|---|---|---|
| CN101222272A | 16.07.2008 | WO2009094880A1 | 06.08.2009 |
| | | EP2219409A1 | 18.08.2010 |
| CN101162987A | 16.04.2008 | None | |
| CN101299634A | 05.11.2008 | None | |
| CN101359984A | 04.02.2009 | None | |
| CN101350801A | 21.01.2009 | WO2009114983A1 | 24.09.2009 |
| | | EP2164181A1 | 17.03.2010 |
| | | KR20100038212A | 13.04.2010 |

Form PCT/ISA /210 (patent family annex) (July 2009)

**INTERNATIONAL SEARCH REPORT**

International application No.

PCT/CN2010/074749

A.   CLASSIFICATION OF SUBJECT MATTER

H04L 5/06 (2006.01) i

H04L 5/26 (2006.01) n

H04L 27/26 (2006.01) n

H04W 88/08 (2009.01) n

Form PCT/ISA /210 (extra sheet) (July 2009)